# EUROPEAN PATENT APPLICATION

(11) **EP 1 612 746 A1**
(43) Date of publication of application: **04.01.2006**
(21) Application number: 04076901.0
(22) Date of filing: 01.07.2004
(51) Int. Cl.: G07F 9/10, G07F 7/00, G07F 11/62, G07F 11/36, G07F 11/70, A21C 15/00, G07F 11/58, A21B 3/07

(54) **Packaging and sales device for fresh bakery products such as hot rolls**

(71) Applicant: Euro-Bakery-Equipment BV, 7940 AM Meppel (NL)
(72) Inventor: van Roosmalen, R.G.L., 7942 JD Meppel (NL)
(74) Representative: van Assen, Jan Willem Bernard

(57) **Abstract**

The invention relates to a packaging and sales device, which keeps fresh bakery products, such as rolls, in limited supply in a hollow, helix shaped conveyor (3), and is provided with a control having an interactive monitor screen which enables to deliver a number of rolls, indicated by the consumer, hygienically packed. The rolls (2) are taken up in a packaging (11) and a sticker with a description of the contents and price, and provided with a code that can be read at the cashier, is produced. In the control there has been taken into account the maximum number of rolls that the supply packaging can contain.

## Description

The invention relates to a packaging and sales device for fresh bakery products, such as rolls, which device is provided with a supply channel, a helix shaped vertical conveyor, a blocking device and a removal channel to a packaging device.

A device of this type is known from US 3.944.049. The object of the invention is adapting this device for self service sales, such as in a bakery shop or supermarket. According to the invention this object is reached, in that the device is provided with a computing unit that can be set by the individual consumer, which computing device comprises an interactive monitor screen that controls the blocking device for letting through the desired number of bakery products in a hollow, helix shaped conveyor, and prints a sticker with the description of the products delivered, the price and a code for the cashier.

The device provides a device that keeps fresh bakery products in a limited supply and is provided with a control that enables to deliver a number of rolls which have been indicated by the consumer. The bakery products are collected in a packaging and a sticker having a description of the contents and price and having a code that can be read at the cashier is brought outside. In the control there has been taken into account the maximal number of rolls that can be taken away in the packaging that is delivered at the same time.

The device is a part of a total facility which comprises an oven for baking the pre-baked rolls, afterwards a conveyor to the sales device, which is provided with a supply buffer, a dosing device and a control unit with a printer for producing the sticker.

An objection of the system in which the pre-baked rolls are baked off in a separate oven is that the rolls leave the oven at a very high temperature, and the baking time which amounts to about 10 minutes. The present invention uses the supply buffer to cool down the rolls, whereas the rolls are baked under the most favourable condition. The buyer gets his rolls directly, hot and well baked. As the consumer does not touch the bread with his hands this is far more hygienic.

The invention relates the part with the supply buffer, the dosing unit and the computing unit with printer.

The invention is elucidated referring to the drawing.
Fig. 1 shows schematically a vertical cross section of an embodiment of the device which is intended for a supermarket.
Fig. 2 shows a cross section over the conveying channel of the helix shaped conveyor for the bakery products.

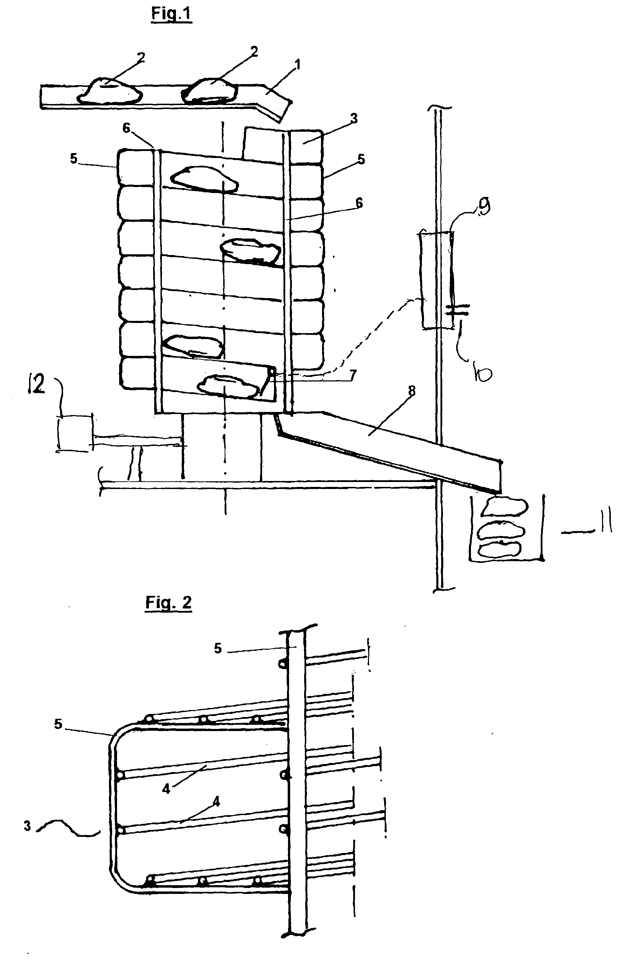

In fig. 1 with (1) the supply channel for hot bakery products, in particular rolls (2), which leave a (not shown) oven, is indicated. The rolls (2) drop into a hollow helix shaped conveyor (3) which is made of metal wire (4), that form a helix shaped cage like conveyor, that guide the rolls (2) in a downward direction. The steel wires (4) are connected with brackets (5) and supports (6). In this way the conveyor (3) forms a supply buffer in which a number of hot rolls (2) are stored, at one hand to cool somewhat down and at the other hand to compensate the irregularity of the sales. The assembly of the helix shaped conveyor (3), the brackets (5) and the supports (6) can be vibrated with the high frequency vibrating device (12), in order to guarantee a regular discharge in a downward direction.

A blocking device (7) is mounted at the end of the conveyor. This blocking device (7) is operated by the control device which can be operated by the consumer through an interactive monitor screen that delivers the number of rolls (2) that the consumer has indicated on the interactive monitor screen with a touch screen (9).

The rolls (2) which are released by the blocking device (7) leave the device at the lower side through the channel (8). On this channel (8) the packaging (11) can be fastened in order to receive the rolls (2). Furthermore a self adhesive sticker device (10) controlled by the controlling device is present, on which for instance with bar code, the number, the price and the total costs of the rolls are indicated. The consumer can stick this sticker on the packaging (11) of the rolls (2), so that this can be paid at the cashier of a supermarket.

The device is provided with a possibility to collect the oversupply of produced rolls (2) when the delivery at the outlet channel (8) stagnates. The control can send signals to the (not shown) oven in order to control the production rate, stop at stagnation and restart the production after reduction of the buffer supply in the conveyor (3).

## Claims

1. Packaging and sales device for fresh bakery products, such as rolls, which device is provided with a supply channel (1), a helix shaped vertical conveyor, a blocking device (7) and an outlet channel (8) to a packaging device, **characterized in that**, the device is provided with a computing unit which can be set by the individual consumer, which computing unit is provided with an interactive monitor screen with touch screen, which controls the blocking unit for letting through the desired number of bakery products (2) in a hollow, helix shaped conveyor (3) and prints a sticker with a description of the delivered product, the price and a code for the cashier.

2. Packaging and sales device for fresh bakery products, such as rolls according to claim 1, **characterized in that**, the helix shaped conveyor can be vibrated by means of a high frequency vibration device (12) for promoting the downward transport of the bakery products.

3. Packaging and sales device for fresh bakery products, such as rolls according to one or more of the claims 1 and 2, **characterized in that**, the device is provided with a computing unit which limits the delivery to a maximum number of rolls (2) that can be contained in the supply packaging.

4. Packaging and sales device for fresh bakery products, such as rolls, according to one or more of the claims 1, 2 and 3, **characterized in that**, the overproduction of rolls (2) is taken up outside the conveyor which serves as a supply buffer.

5. Supply and sales device for fresh bakery products, such as rolls, according to claims 1, 2, 3, 4 and 5, **characterized in that**, the control device sends signals to the oven for the control of the production of rolls (2).
